(19) Europäisches Patentamt / European Patent Office / Office européen des brevets

(11) **EP 2 721 277 B1**

(12) **FASCICULE DE BREVET EUROPEEN**

(45) Date de publication et mention de la délivrance du brevet:
**11.01.2017 Bulletin 2017/02**

(21) Numéro de dépôt: **12729689.5**

(22) Date de dépôt: **12.06.2012**

(51) Int Cl.:
*F16H 25/22* (2006.01)   *F02K 1/56* (2006.01)
*F16H 25/24* (2006.01)   *F16H 25/20* (2006.01)
*F02K 1/76* (2006.01)

(86) Numéro de dépôt international:
**PCT/FR2012/051312**

(87) Numéro de publication internationale:
**WO 2012/175841 (27.12.2012 Gazette 2012/52)**

(54) **ENSEMBLE D'ACTIONNEMENT POUR INVERSEUR DE POUSSÉE POUR MOTEUR D'AÉRONEF**

BETÄTIGUNGSANORDNUNG FÜR EINE SCHUBUMKEHRVORRICHTUNG EINES FLUGZEUGMOTORS

ACTUATING ASSEMBLY FOR A THRUST REVERSER OF AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2011 FR 1155402**

(43) Date de publication de la demande:
**23.04.2014 Bulletin 2014/17**

(73) Titulaires:
• **Aircelle**
  **76700 Gonfreville l'Orcher (FR)**
• **Sagem Défense Sécurité**
  **75015 Paris (FR)**

(72) Inventeurs:
• **MORADELL-CASELLAS, Pierre**
  **F-61100 Saint Georges Des Groseillers (FR)**
• **DELNAUD, Franck**
  **F-75015 Paris (FR)**

(74) Mandataire: **Gaillarde, Frédéric F. Ch. et al**
  **Cabinet Germain & Maureau**
  **31-33, rue de la Baume**
  **75008 Paris (FR)**

(56) Documents cités:
**WO-A1-2010/122253     GB-A- 2 319 810**

**Description**

La présente demande de brevet se rapporte à un ensemble d'actionnement pour inverseur de poussée pour moteur d'aéronef.

Un avion est mu par plusieurs turboréacteurs logés chacun dans une nacelle servant à canaliser les flux d'air engendrés par le turboréacteur, cette nacelle abritant en général un système mécanique d'inversion de poussée.

Le rôle d'un inverseur de poussée est, lors de l'atterrissage d'un avion, d'améliorer la capacité de freinage de celui-ci en redirigeant vers l'avant au moins une partie de la poussée engendrée par le turboréacteur, laquelle vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre une position fermée ou « jet direct » dans laquelle ils ferment ce passage et une position ouverte ou « jet inverse » dans laquelle ils ouvrent dans la nacelle un passage destiné au flux dévié.

Dans le cas d'un inverseur de poussée à grilles par exemple, également connu sous le nom d'inverseur à cascade, la réorientation du flux d'air est effectuée par des grilles de déviation, le capot mobile n'ayant qu'une simple fonction de coulissage visant à découvrir ou recouvrir ces grilles.

La translation du capot mobile s'effectue selon un axe longitudinal sensiblement parallèle à l'axe de la nacelle. Des volets d'inversion de poussée, actionnés par le coulissement du capot, permettent une obstruction de la veine du flux froid en aval des grilles de déviation, de manière à optimiser la réorientation du flux froid vers l'extérieur de la nacelle.

Le déplacement d'un tel capot mobile est couramment obtenu au moyen d'actionneurs mécaniques tels que celui qui est divulgué dans la demande PCT/US2004/019260, et qui a été représenté à la figure 1 ci annexée.

A noter que l'énergie nécessaire au fonctionnement d'un tel actionneur peut être hydraulique (actionneur hydraulico-mécanique) ou électrique (actionneur électro mécanique).

Un tel actionneur mécanique comprend une vis sans fin 1 sur laquelle est vissé un écrou 3, lui-même solidaire d'un tube d'extension 5 dont l'extrémité libre se termine par un oeillet 7.

De préférence, des billes 8 sont interposées entre les filets de la vis 1 et ceux de l'écrou 3, de manière à réduire les frottements, de sorte que l'on désigne couramment ce type d'actionneur par « vis à billes ».

La vis 1 comporte, à son extrémité opposée à celle de l'oeillet 7, un pignon 9 à denture conique coopérant avec un pignon maître 11 lui-même entraîné directement ou indirectement par un moyen d'entraînement en rotation tel qu'un moteur électrique.

Sous l'action de ce moteur électrique, on peut faire pivoter la vis 1 dans un sens ou dans l'autre, et ainsi translater l'écrou 3 dans un sens ou dans l'autre, et donc allonger ou rétracter le tube 5.

Ces mouvements du tube 5 permettent, par l'intermédiaire de son oeillet 7, d'agir sur l'élément de la nacelle que l'on souhaite déplacer tel qu'un capot mobile d'inverseur de poussée à grilles (étant entendu qu'il y a en général plusieurs actionneurs de ce type pour mouvoir un tel capot mobile).

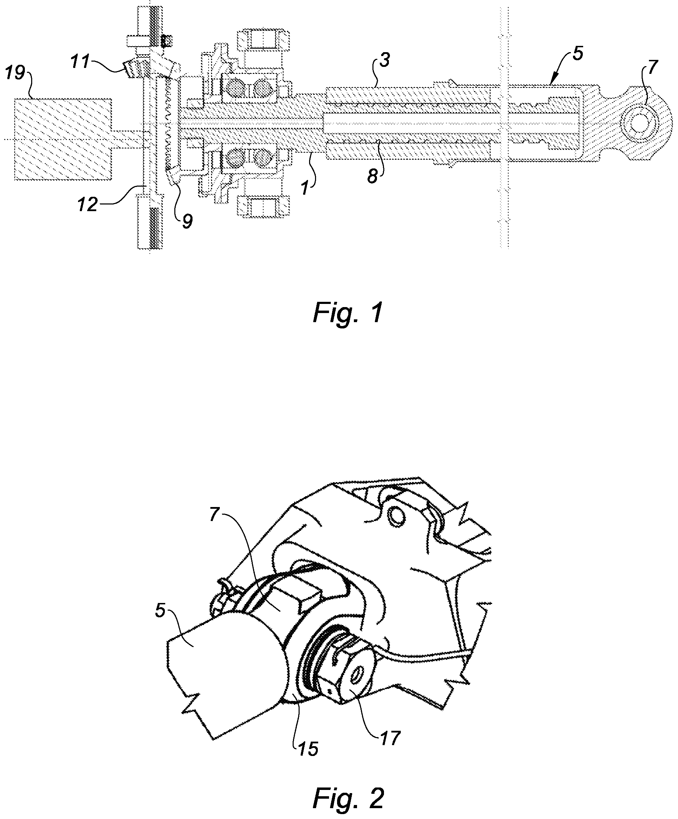

Plus précisément, comme cela est visible sur la figure 2, l'oeillet 7 coopère avec une chape 15 solidaire du capot mobile de l'inverseur de poussée (non représenté), cet oeillet étant relié à cette chape par une vis boulonnée 17.

Pour empêcher un déploiement intempestif du capot mobile de l'inverseur de poussée, on prévoit classiquement des moyens de verrouillage de sécurité, qui doivent être désactivés avant toute opération d'inversion de poussée.

Ces moyens de verrouillage comprennent notamment des moyens primaires de verrouillage, communément désignés par PLS (Primary Locking System).

Ce système PLS, représenté de manière générique par la boîte 19 sur la figure 1, comprend une tige de verrouillage apte à bloquer la rotation de l'arbre d'entraînement 12 du pignon maître 11, étant ici rappelé que cet arbre d'entraînement est lui-même entraîné en rotation par des arbres de transmission flexibles communément appelés Flexshafts.

Un tel système PLS est connu par exemple du document US4586329, US6487846, ou bien du document WO 2010/122253 A1.

Comme cela est visible dans chacun des dispositifs divulgués par ces documents, la conception du système PLS est complexe : la tige de verrouillage comporte à son extrémité une barre de verrouillage, montée pivotante et coulissante sur ce doigt, les extrémités de cette barre de verrouillage étant aptes à coopérer avec deux butées disposées à 180° sur l'arbre d'entraînement du pignon maître.

La présente invention a notamment pour but de simplifier un tel dispositif.

On atteint ce but de l'invention avec un ensemble d'actionnement pour inverseur de poussée pour moteur d'aéronef, comprenant :

- un arbre d'entraînement portant un pignon maître,
- une vis à billes portant un pignon esclave engrenant avec ledit pignon maître,
- un écrou apte à se déplacer en translation sur la vis à billes sous l'effet de la rotation de celle-ci,
- un tube d'extension solidaire dudit écrou et comportant à son extrémité libre un organe de liaison avec une partie dudit inverseur devant être actionnée, et
- des moyens de verrouillage de la rotation dudit arbre d'entraînement, adaptés pour immobiliser ladite partie dans une position « jet direct » de l'inverseur,

caractérisé en ce que lesdits moyens de verrouillage comprennent une unique butée solidaire dudit arbre d'entraînement, et une clavette mobile entre une position de verrouillage, dans laquelle elle entrave la rotation de ladite butée, et une position de déverrouillage, dans laquelle elle permet cette rotation,

et en ce que le rapport de réduction entre lesdits pignons esclave et maître est pair.

Grâce à ces caractéristiques, et pour autant que l'on parte d'une position de référence actionneur fermé ou sur son PLS dans laquelle la clavette est en butée contre l'unique butée de l'arbre d'entraînement, un pivotement de modulo 180° du tube d'entraînement aura pour effet de replacer toujours dans la même position la butée de l'arbre d'entraînement au retour de la position de référence de l'actionneur.

Un tel pivotement peut intervenir en particulier lors des opérations de montage de l'ensemble d'entraînement selon l'invention sur un inverseur de poussée : lors de ces opérations en effet, l'opérateur peut avoir à faire pivoter l'extrémité libre du tube d'extension, souvent matérialisée par un oeillet de fixation, de modulo 180° pour le faire coopérer avec la partie correspondante de l'inverseur à actionner, comme cela résultera notamment de la description détaillée qui va suivre.

Ainsi, en particulier, en partant d'un ensemble d'actionnement qui a été placé dans une configuration dite de référence dans laquelle la clavette de verrouillage est en butée contre l'unique butée de l'arbre d'entraînement, on est sûr de se retrouver dans cette même position de référence une fois l'ensemble d'actionnement monté sur l'inverseur et repositionné en position de référence.

De la sorte, la présence d'une unique butée sur l'arbre d'entraînement est suffisante : il n'y a en effet pas de risque que cette butée soit mal placée par rapport à la clavette de verrouillage lorsque l'inverseur se trouve en position fermée (« jet direct ») à la fin des opérations de montage, et n'empêche ainsi le reverrouillage effectif du moyen de blocage.

On peut de la sorte réaliser un calage de la position de la butée de l'arbre d'entraînement par rapport à la clavette de verrouillage, contrairement à l'état de la technique dans lequel le moyen retenu pour réduire le risque d'apparition d'une course d'ouverture non souhaitée de l'inverseur de poussée, était de prévoir deux butées disposées à 180° sur l'arbre d'entraînement, et un dispositif complexe de barre de verrouillage montée pivotante et coulissante sur un doigt de verrouillage mobile en translation.

Suivant d'autres caractéristiques optionnelles de la présente invention :

- on choisit les caractéristiques dudit ensemble d'actionnement de sorte que le verrouillage de ladite butée par ladite clavette soit effectif y compris lorsque la partie dudit inverseur devant être actionnée est séparée de sa position « jet direct » d'une distance prédéterminée : cette caractéristique permet notamment de rendre le verrouillage effectif en dépit des différentes tolérances dimensionnelles entrant en jeu, et des éventuelles désynchronisations des ensembles d'actionnement agissant de concert sur ladite partie d'inverseur ;

- on choisit lesdites caractéristiques de sorte que ladite distance soit de l'ordre de 2 millimètres : cette valeur correspond à ce qui est imposé par les règles de l'art ;

- on choisit lesdites caractéristiques de sorte que :

$$(J/P) * R < (1 - X),$$

où :

J est la distance susmentionnée,
P est le pas de la vis à billes,
R est le rapport de réduction entre ledit pignon esclave et ledit pignon maître, et
X est un nombre réel positif appartenant à l'intervalle [0, 1], représentatif du rapport entre la longueur circonférentielle cumulée de ladite butée et de ladite clavette, et la longueur de la circonférence totale associée.

Cette dernière formule permet de savoir, si pour des valeurs données de la distance J, de pas de vis à billes P et de rapport de réduction R, il reste suffisamment de longueur circonférentielle pour placer la clavette et la butée, compte tenu des contraintes de résistance mécanique souhaitée pour ces pièces.

D'autres caractéristiques et avantages de la présente invention apparaîtront à la lumière de la description qui va suivre, et à l'examen des figures ci-annexées, dans lesquelles :

- la figure 1 est une vue en coupe longitudinale d'un ensemble d'actionnement pour inverseur de poussée de turboréacteur décrit dans le préambule de la présente description,

- la figure 2 est une vue en perspective de la zone de liaison de l'extrémité libre de l'ensemble de la figure 1 avec la partie correspondante de l'inverseur de poussée, tel que décrit en préambule de la présente description,

- la figure 3 est une vue schématique en coupe longitudinale d'un ensemble d'actionnement selon l'invention,

- la figure 4a est une vue de détail en coupe, prise selon la ligne C-C de la figure 3, de l'ensemble d'actionnement présenté à cette figure, lorsque cet ensemble d'actionnement se trouve en position de référence,

- la figure 4b est une vue schématique simplifiée de l'ensemble d'actionnement de la figure 3, dans sa position de référence,

- la figure 4c est une vue développée de la figure 4a, mettant en évidence les positions respectives d'une clavette et d'une butée de verrouillage de l'ensemble d'actionnement selon l'invention,
- la figure 4d est une vue en coupe prise selon la ligne D-D de la figure 4b, et
- les figures 5a, 5b et 5c sont des vues respectivement analogues aux figures 4a, 4b et 4c, lorsque l'ensemble d'actionnement selon l'invention se trouve dans une position correspondant à un jeu de la partie de l'inverseur de poussée devant être actionné.

Sur l'ensemble de ces figures, des références identiques ou analogues désignent des organes ou ensembles d'organes identiques ou analogues.

Dans ce qui suit, pour fixer les idées, on supposera que l'inverseur de poussée à actionner est du type à grilles, et que la partie devant être déplacée est par conséquent un capot mobile apte à recouvrir ou à découvrir ces grilles, selon qu'il se trouve en position fermée (« jet direct »), ou ouverte (« jet inverse»).

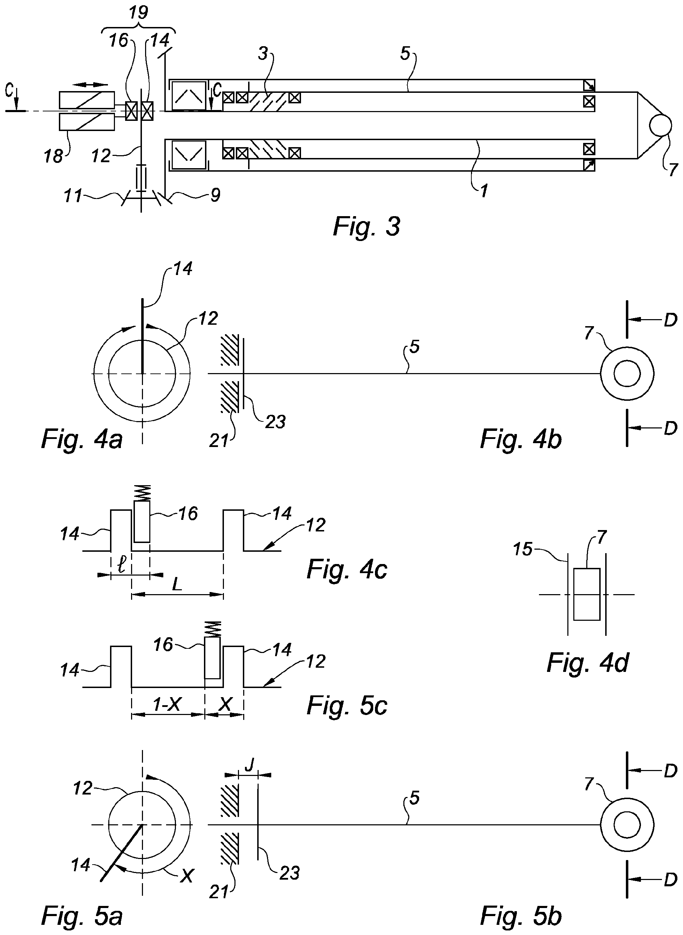

Comme on peut le voir sur la figure 3, l'ensemble d'actionnement selon l'invention comprend, tout comme l'ensemble d'actionnement de l'art antérieur représenté à la figure 1 :

- une vis sans fin 1,
- un écrou 3 vissé sur cette vis sans fin,
- un tube d'extension 5 solidaire de cet écrou 3,
- un oeillet 7 fixé à l'extrémité libre de ce tube d'extension 5,
- un pignon esclave 9 à denture conique,
- un pignon maître 11 lui aussi à denture oblique engrenant avec le pignon esclave 9,
- un arbre d'entraînement 12 sur lequel est monté le pignon maître 11, cet arbre d'entraînement étant susceptible d'être entraîné en rotation par un arbre de transmission flexible du type flexshaft (non représenté),
- une unique butée 14 solidaire de l'arbre d'entraînement 12,
- une clavette 16,
- un organe d'actionnement 18 tel qu'un solénoïde, apte à mouvoir la butée 16 entre une position de verrouillage, dans laquelle elle entrave la rotation de la butée 14, et une position de déverrouillage, dans laquelle elle permet cette rotation.

L'unique butée 14, la clavette 16 et le solénoïde 18 forment des moyens de verrouillage 19.

Le rapport de réduction entre le pignon esclave 9 et le pignon maître 11 est pair, et par exemple égal à 2 ou 4.

Ceci signifie que le pignon maître effectue respectivement deux ou quatre fois plus de tours que n'en effectue le pignon esclave.

Avant de monter l'ensemble d'actionnement selon l'invention sur le capot mobile de l'inverseur de poussée, on s'assure que lorsque le tube d'extension 5 et en positon complètement rétractée et que l'oeillet 7 se trouve correctement orienté par rapport à la chape 15 comme indiqué sur la figure 4d, l'arbre d'entraînement 12 et la butée 14 associée se trouvent dans une position de référence bien déterminée, représentée aux figures 4a et 4c.

Dans cette position de référence, correspondant à la position fermée du système d'actionnement, la clavette 16 est en position verrouillée.

Compte tenu du rapport de réduction pair entre le pignon esclave 9 et le pignon maître 11, on est sûr que si l'on fait pivoter l'oeillet 7 et son tube d'extension associé 5 d'un demi tour ou plus modulo 180° lors des opérations de montage de cet oeillet par l'intérieur de l'étrier 15 associé au capot mobile de l'inverseur de poussée, la butée 14 atteindra toujours la même position : elle effectuera en effet un nombre entier de tours pour chaque demi tour de l'oeillet 7.

A noter qu'en fonctionnement, le blocage en rotation de l'écrou 3 est réalisé par l'oeillet 7.

Ainsi en particulier, si on part de la position de référence susmentionnée, il est certain qu'en faisant pivoter l'oeillet 7 dans l'une quelconque de ces positions permettant de coopérer avec l'étrier 15, on arrivera toujours à la même position de référence dans laquelle la butée 14 est au contact de la clavette 16, assurant ainsi le blocage en rotation de l'arbre d'entraînement 12, correspondant à une position fermée (« jet direct ») du capot mobile de l'inverseur de poussée.

De la sorte, avec une butée 14 montée sur l'arbre d'entraînement 12, on peut s'assurer que malgré les différentes manipulations pouvant avoir lieu pendant les opérations de montage du dispositif d'actionnement selon l'invention sur le capot mobile de l'inverseur de poussée, cet ensemble se trouvera toujours in fine dans sa configuration de référence dans laquelle le capot mobile est bloqué en position fermée.

Les règles de l'art en vigueur imposent par ailleurs que le dispositif de verrouillage puisse être effectif d'une position à partir de la position complètement fermée du capot mobile dans un intervalle, de l'ordre de 2 mm.

Ceci permet de s'assurer que l'on puisse réaliser le verrouillage de l'inverseur de poussée malgré les différentes tolérances dimensionnelles et de montage qui peuvent entrer en jeu, et les éventuelles différences de synchronisation d'actionnement des autres ensembles d'actionnement agissant sur le capot mobile.

Cette distance J de 2 mm est représenté de manière schématique sur la figure 5b, cette distance étant placée entre des butées 21 solidaires de la vis à bille 1 et des butées 23 solidaires du tube d'extension 5.

Pour qu'un verrouillage soit toujours possible malgré l'existence d'une telle distance J, il importe que l'on soit certain que la clavette 16 puisse se positionner en position verrouillée, quelque soit la position que peut occuper la butée 14, correspondant aux différentes positions que peut occuper le tube d'extension 15 sur toute la plage de la distance J.

Pour atteindre ce résultat, il faut que la plus grande longueur circonférentielle L séparant les deux faces de la butée 14, minorée par la longueur circonférentielle I de la clavette 16, permette un déplacement axial du tube d'extension 5 d'une valeur égale à la distance J susmentionnée.

En pratique, il existe des limitations mécaniques structurelles, liées à la résistance de la butée 14 et le clavette 16 : il importe en effet, comme cela est visible à la figure 5c, que la longueur circonférentielle cumulée de la matière formée par la butée 14 et la clavette 16, ne descende pas en dessous d'une certaine valeur.

Plus concrètement, si l'on appelle X le rapport entre la longueur circonférentielle cumulée de la butée 14 et de la clavette 16, et la longueur de la circonférence totale associée, comme cela est visible sur la figure 5c, on s'assurera que la relation suivante est vérifiée :

$$(J/P) * R < (1 - X)$$

où J et la distance susmentionnée, P est le pas de vis à bille, R est le rapport de réduction entre le pignon esclave 9 et le pignon maître, et X représente la proportion susmentionnée.

Cette relation permet, à partir des valeurs connues pour J, P et R, de connaître les valeurs autorisées pour X.

Ainsi par exemple, en choisissant une distance de 2 mm, un pas de 10 mm pour la vis à bille (ce qui signifie que le tube d'extension 5 se déplace de 10 mm pour chaque tour complet de la vis 1), et un rapport de réduction de 4, on voit que (J/P)* R vaut 0,8, de sorte que la valeur maximale pour X est 0,2.

Si cette valeur s'avère insuffisante compte tenu des caractéristiques de résistance des matériaux choisis pour former la butée 14 et la clavette 16, on peut alors essayer de modifier le rapport de réduction, par exemple en le ramenant à 2, ce qui autorise une valeur maximale de 0,6 pour X.

Par une augmentation du pas de la vis à billes, on peut de la même façon pour une même distance J, augmenter la valeur de X.

Comme, on l'aura compris à la lumière de la description qui précède, grâce à un rapport de réduction approprié et au positionnement de l'ensemble d'actionnement selon l'invention dans une position de référence bien déterminée, on peut s'assurer de manière très simple d'un verrouillage positif du capot mobile de l'inverseur de poussée en position fermée, avec de plus autorisation d'un léger jeu conformément aux règles de l'art en vigueur.

L'invention permet de s'affranchir de ce système complexe de la technique antérieure à plusieurs butées et à bras de blocage articulé associé.

On gagne ainsi en poids, en simplicité d'entretien et en coût.

Bien entendu, la présente invention n'est nullement limitée aux modes de réalisation décrits et représentés.

C'est ainsi par exemple que les préceptes exposés ci-dessus pourraient aussi être appliqués à un inverseur de poussée à portes.

## Revendications

1. Ensemble d'actionnement pour inverseur de poussée pour moteur d'aéronef, comprenant :

   - un arbre d'entraînement (12) portant un pignon maître (11),
   - une vis à billes (1) portant un pignon esclave (9) engrenant avec ledit pignon maître (11),
   - un écrou (3) apte à se déplacer en translation sur la vis à billes (1) sous l'effet de la rotation de celle-ci,
   - un tube d'extension (5) solidaire dudit écrou (3) et comportant à son extrémité libre un organe de liaison (7) avec une partie (15) dudit inverseur devant être actionnée, et
   - des moyens de verrouillage (19) de la rotation dudit arbre d'entraînement (12), adaptés pour immobiliser ladite partie dans une position « jet direct » de l'inverseur,

   **caractérisé en ce que** lesdits moyens de verrouillage (19) comprennent une unique butée (14) solidaire dudit arbre d'entraînement (12), et une clavette (16) mobile entre une position de verrouillage, dans laquelle elle entrave la rotation de ladite butée (14), et une position de déverrouillage, dans laquelle elle permet cette rotation,
   et **en ce que** le rapport de réduction (R) entre lesdits pignons esclave (9) et maître (11) est pair.

2. Ensemble d'actionnement selon la revendication 1, dans lequel les caractéristiques dudit ensemble d'actionnement sont telles que le verrouillage de ladite butée (14) par ladite clavette (16) soit effectif y compris lorsque la partie dudit inverseur devant être actionnée est séparée de sa position « jet direct » d'une distance prédéterminée (J).

3. Ensemble d'actionnement selon la revendication 2, dans lequel lesdites caractéristiques sont telles que ladite distance (J) soit de l'ordre de 2 millimètres.

4. Ensemble d'actionnement selon l'une des revendications 2 ou 3, dans lequel on choisit lesdites caractéristiques de sorte que :

$$(J / P) * R < (1 - X),$$

où :

J est la distance susmentionnée,
P est le pas de la vis à billes (1),
R est le rapport de réduction entre ledit pignon esclave (9) et ledit pignon maître (11), et
X est un nombre réel positif appartenant à l'intervalle [0, 1], représentatif du rapport entre la longueur circonférentielle cumulée de ladite butée (14) et de ladite clavette (16), et la longueur de la circonférence totale associée.

5. Inverseur de poussée pour turboréacteur d'aéronef, **caractérisé en ce qu'**il comprend au moins un ensemble d'actionnement conforme à l'une quelconque des revendications précédentes.

6. Nacelle pour turboréacteur d'aéronef, **caractérisée en ce qu'**elle comprend un inverseur de poussée conforme à la revendication 5.


**Patentansprüche**

1. Betätigungsanordnung für Schubumkehr für ein Luftfahrzeugtriebwerk, Folgendes umfassend:

- eine Antriebswelle (12), die ein Master-Ritzel (11) trägt,
- eine Kugelrollspindel (1), die ein Slave-Ritzel (9) trägt, das mit dem besagten Master-Ritzel (11) in Eingriff steht,
- eine Mutter (3), die imstande ist, sich auf der Kugelrollspindel (1) unter der Wirkung der Drehung derselben zu verschieben,
- ein Verlängerungsrohr (5), das fest mit der besagten Mutter (3) verbunden ist, und an seinem freien Ende ein Verbindungsorgan (7) mit einem Abschnitt (15) der besagten Umkehr umfasst, die betätigt werden soll, und
- Mittel zum Verriegeln (19) der Drehung der besagten Antriebswelle (12), die ausgeführt sind, um den besagten Abschnitt in einer "Direktstrahl"-Position der Umkehr zu blockieren,

**dadurch gekennzeichnet, dass** die besagten Mittel zum Verriegeln (19) einen einzigen Anschlag (14) umfassen, der fest mit der besagten Antriebswelle (12) verbunden ist, und eine Passfeder (16), die zwischen einer Verriegelungsposition, in der sie die Drehung des besagten Anschlags (14) behindert, und einer Freigabeposition bewegt werden kann, in der sie diese Drehung erlaubt, und dadurch, dass das Übersetzungsverhältnis (R) zwischen den besagten Slave (9) und Master (11) Ritzeln geradzahlig ist.

2. Betätigungsanordnung nach Anspruch 1, wobei die Eigenschaften der besagten Betätigungsanordnung dergestalt sind, dass die Verriegelung des besagten Anschlags (14) durch die besagte Passfeder (16) auch dann wirksam ist, wenn der Abschnitt der besagten Umkehr, der zu betätigen ist, von seiner "Direktstrahl"-Position um einen vorbestimmten Abstand (J) getrennt ist.

3. Betätigungsanordnung nach Anspruch 2, wobei die besagten Eigenschaften dergestalt sind, dass der besagte Abstand (J) im Bereich von 2 Millimetern liegt.

4. Betätigungsanordnung nach einem der Ansprüche 2 oder 3, wobei man die besagten Eigenschaften auswählt, sodass:

$$(J/P) * R < (1 - X)$$

ist, wobei:

J der zuvor genannte Abstand ist,
P die Steigung der Kugelrollspindel (1) ist,
R das Übersetzungsverhältnis zwischen dem besagten Slave-Ritzel (9) und dem besagten Master-Ritzel (11) ist, und
X eine positive reelle Zahl ist, die dem Intervall [0, 1] angehört, repräsentativ für das Verhältnis zwischen der kumulierten Umfangslänge des besagten Anschlags (14) und der besagten Passfeder (16), und der Länge des zugehörigen Gesamtumfangs.

5. Schubumkehr für ein Luftfahrzeug-Turbotriebwerk, **dadurch gekennzeichnet, dass** sie zumindest eine Betätigungsanordnung nach irgendeinem der vorhergehenden Ansprüche umfasst.

6. Gondel für ein Luftfahrzeug-Turbotriebwerk, **dadurch gekennzeichnet, dass** sie eine Schubumkehr nach Anspruch 5 umfasst.


**Claims**

1. An actuating assembly for thrust reverser for an aircraft motor, comprising:

- a drive shaft (12) carrying a master pinion (11),
- a ball screw (1) carrying a slave pinion (9) meshing with said master pinion (11),
- a nut (3) capable of displacing in translation on the ball screw (1) under the effect of the rotation thereof,
- an extension tube (5) secured to said nut (3) and including at its free end a connecting member (7) with a portion (15) of said thrust reverser to be actuated, and
- means (19) for locking the rotation of said drive shaft (12), adapted to immobilize said portion in a « direct jet » position of the thrust reverser,

**characterized in that** said locking means (19) comprise a single stop (14) secured to said drive shaft (12), and a key (16) movable between a locking position, in which it hinders the rotation of said stop (14), and an unlocking position, in which it allows this rotation,
and **in that** the reduction ratio (R) between said slave (9) and master (11) pinions is even.

2. The actuating assembly according to claim 1, wherein the features of said actuating assembly are such that the locking of said stop (14) by said key (16) is effective including when the portion of said thrust reverser to be actuated is separated from its « direct jet » position by a predetermined distance (J).

3. The actuating assembly according to claim 2, wherein said features are such that said distance (J) is in the range of 2 millimeters.

4. The actuating assembly according to any of claims 2 or 3, wherein said features are selected such that:

$$(J/P) * R < (1-X),$$

where:

J is the aforementioned distance,
P is the pitch of the ball screw (1),
R is the reduction ratio between said slave pinion (9) and said master pinion (11), and
X is a positive real number belonging to the interval [0, 1], representative of the ratio between the cumulative circumferential length of said stop (14) and said key (16), and the length of the associated total circumference.

5. A thrust reverser for aircraft turbojet engine, **characterized in that** it comprises at least one actuating assembly in accordance with any one of the preceding claims.

6. A nacelle for aircraft turbojet engine, **characterized in that** it comprises a thrust reverser in accordance with claim 5.

*Fig. 1*

*Fig. 2*

Fig. 3

Fig. 4a

Fig. 4b

Fig. 4c

Fig. 5c

Fig. 4d

Fig. 5a

Fig. 5b

## RÉFÉRENCES CITÉES DANS LA DESCRIPTION

**Documents brevets cités dans la description**

- US 2004019260 W
- US 4586329 A
- US 6487846 B
- WO 2010122253 A1